# FASCICULE DE BREVET EUROPEEN

(11) **EP 0 333 043 B1**
(45) Date de publication et mention de la délivrance du brevet: **26.10.1994**
(21) Numéro de dépôt: 89104224.4
(22) Date de dépôt: 09.03.1989
(51) Int. Cl.: G06F 15/21

(54) **Système de traitement des expeditions de paquets**
Verarbeitungssystem für Paketversand
Parcels shipping processing system

(30) Priorité: 14.03.1988 FR 8803277
(43) Date de publication de la demande: 20.09.1989
(73) Titulaire: NEOPOST INDUSTRIE, F-92220 Bagneux (FR)
(72) Inventeur: Fajour, Michel, F-92320 Chatillon (FR); Vanpoucke, Jean-François, F-92220 Bagneux (FR)
(74) Mandataire: Weinmiller, Jürgen

(56) Documents cités:
- GB-A- 2 182 178
- PATENT ABSTRACTS OF JAPAN, vol. 5, no. 185 (P-91)(857), 25. novembre 1981; & JP-A-56111963
- COMPUTER SYSTEMS, no. 10, octobre 1985, pages 19,20; "Helping to move freight forward."
- PATENT ABSTRACTS OF JAPAN, vol. 7, no. 266 (P-239)(1411), 26 novembre 1983; & JP-A-58146957
- THE OFFICE, vol. 100, no. 2, août 1984, page 79-80, USA; R.C. LAWRENCE JR.: "The Mailroom can help your business prosper."

## Description

La présente invention concerne un système de traitement des expéditions de paquets. Ce système permet de traiter les expéditions de paquets, en provenance de différents expéditeurs, qui sont à acheminer vers différents destinataires par différents transporteurs pouvant être publics ou privés.

Les opérations pour l'expédition de paquets sont actuellement pour l'essentiel d'entre elles des opérations manuelles réalisées par l'expéditeur et/ou le transporteur chargé de l'expédition. Elles donnent lieu, en particulier, à l'établissement de différents documents, qui sont spécifiques à chaque transporteur et, le cas échéant, à chaque mode d'envoi possible. Ces documents sont des étiquettes, des lettres de transport, des vignettes d'affranchissement, notamment. Ces documents sont remplis ou complétés, l'un après l'autre et pour une majorité d'entre eux à la main, pour chaque paquet ainsi rendu prêt pour son expédition. Ils peuvent occasionner des erreurs de lecture ou de transcription et, par suite, des erreurs d'acheminement chez le transporteur, qui prolongent les délais de distribution et sont en définitive préjudiciables au client final.

Le document GB 2 182 178 décrit un système informatique pour le traitement des expéditions de paquets. Il automatise la gestion de ces expéditions mais il laisse subsister des erreurs d'expédition découlant d'erreurs humaines au moment de la saisie des données pour chaque paquet.

La présente invention a pour but de réaliser le traitement des expéditions de paquets par différents transporteurs en assurant une gestion des expéditions pour générer de manière rapide, sûre et particulièrement souple les documents convenables pour chaque expédition. Il est en outre conçu pour permettre l'établissement de bordereaux récapitulatifs, pour les transporteurs ou les expéditeurs et les listes d'expéditions traitées mais non enlevées ou d'expéditions non validées.

Elle a donc pour objet un système de traitement des expéditions de paquets permettant, à partir de données définissant pour chaque expédition un destinataire et un transporteur avec un service de transporteur a utiliser, l'acheminement des expéditions reçues de différents expéditeurs vers leurs destinataires respectifs par différents transporteurs, comportant :
- des premières mémoires qui constituent, d'une part un fichier des transporteurs contenant des caractéristiques propres aux transporteurs utilisables dans le système et relatives à l'identification individuelle des transporteurs eux-mêmes et à l'identification, pour chacun d'eux, de services possibles et de types de documents devant pour chaque service accompagner chaque expédition, et, d'autre part, un fichier des expéditeurs contenant des caractéristiques propres aux expéditeurs utilisant le système et relatives à l'identification individuelle des expéditeurs eux-mêmes et pour chacun d'eux à l'identification de chaque transporteur qu'il peut utiliser avec chaque service de ce transporteur auquel il a le droit,
- une deuxième mémoire qui constitue un fichier des expéditions,
- un moyen d'entrée des données relatives à chaque expédition,
- des moyens d'édition de documents,
- un ensemble programmé de commande couplé auxdits fichiers, au moyen d'entrée et aux moyens d'édition et comportant des moyens de pré-traitement des expéditions, assurant une saisie des données, des moyens de traitement des expéditions, affectant à chaque expédition une référence individuelle définissant avec les données saisies et vérifiées des caractéristiques de l'expédition concernée dite alors traitée et mémorisant les caractéristiques de chaque expédition traitée en une fiche d'expédition dans le fichier des expéditions, et des moyens de commande d'édition de documents permettant la génération de documents identifiés dans le fichier des transporteurs à partir de la fiche d'expédition du fichier des expéditions, pour l'expédition concernée; caractérisé en ce que les moyens de prétraitement des expéditions comportent des moyens logiciels pour comparer les données saisies à des données contenues dans les premières mémoires et à des données contenues dans la deuxième mémoire; et pour afficher toute erreur détectée par cette comparaison.

Selon une autre caractéristique, l'ensemble programmé comporte des moyens de mise à jour de chaque fiche d'expédition, couplés auxdits moyens de commande d'édition et assurant l'enregistrement du nombre de documents édités, de chaque type, dans la fiche d'expédition, pour l'expédition concernée.

Selon une autre caractéristique, l'ensemble programmé comporte en outre des moyens de sélection entre un mode d'édition de documents en simultané et un mode d'édition de documents en reprise, pour chaque expédition, et un mode d'édition de documents en enchaîné pour plusieurs expéditions.

D'autres caractéristiques et les avantages de la présente invention apparaîtront clairement au cours de la description d'un mode de réalisation, donnée ci-après en regard du dessin ci-annexé. Dans ces dessins :
- la figure 1 est un schéma synoptique du système de traitement des expéditions de paquets selon la présente invention,
- la figure 2 illustre un ensemble de mémoires dites fichiers de la figure 1,
- la figure 3 représente un organigramme de commande du système selon la figure 1,
- la figure 4 illustre une grille vierge relative aux expéditions, donnée en regard de l'un des fichiers, dit fichier des expéditions de la figure 2, pour expliquer le fonctionnement du système selon l'invention.

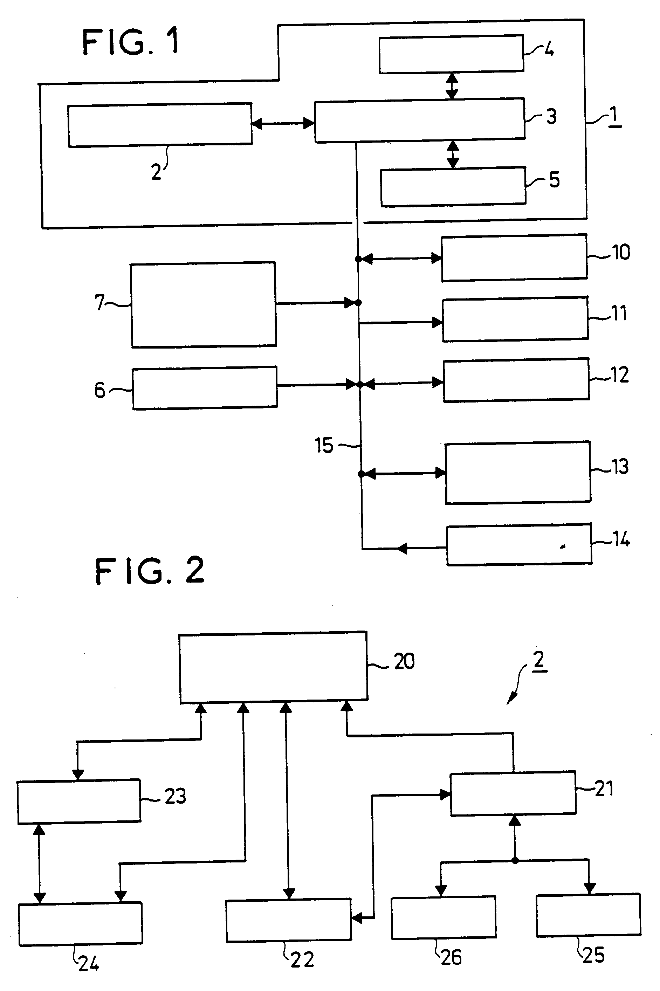

Le système de traitement des expéditions de paquets, selon l'invention et tel qu'illustré dans la figure 1, est organisé autour d'une unité centrale de traitement 1 comportant un ensemble de mémoires 2 dites fichiers, un ensemble programmé de commande 3, une mémoire de fonctions spécifiques de commande 4 et une horloge calendrier 5. L'ensemble de mémoires 2, la mémoire 4 et l'horloge calendrier 5 sont couplés à l'ensemble programmé 3 par des bus internes.

Le système selon l'invention comporte, en outre, un clavier 6 et un écran 7 couplés à l'unité centrale de traitement 1, pour le dialogue avec un opérateur, des moyens de génération de documents par exemple des imprimantes, ici au nombre des trois portant les références 10, 11 et 12 et affectées à l'édition de documents spécifiques, une machine à affranchir 13 et une balance 14 également couplées à l'unité centrale de traitement 1. La clavier, l'écran, les imprimantes, la machine à affranchir et la balance sont des équipements périphériques de l'unité centrale de traitement 1 à laquelle ils sont couplés à un bus commun d'accès 15, par des liaisons individuelles bidirectionnelles ou unidirectionnelles représentées mais non référencés.

Dans la figure 1, les imprimantes 10, 11 et 12 sont affectées à l'édition de documents spécifiques de type papier. Par exemple l'imprimante 10 est utilisée pour l'impression de bordeaux récapitulatifs, l'imprimante 11 pour l'impression d'étiquettes et l'imprimante 12 pour l'impression de lettres de transport. Le système peut comporter, bien entendu, un nombre plus important, ou moindre, d'imprimantes chargées en formulaires vierges convenables selon les documents à éditer à un moment donné.

En variante, ces imprimantes peuvent aussi, tout au moins pour une partie d'entre elles, être remplacées par d'autres appareils pour l'édition locale de documents de type autre que celui papier, par exemple sur support magnétique, ou pour l'édition à distance de documents par télétransmission, ou encore être associées à de tels appareils.

Dans ce système représenté dans la figure 1, la machine à affranchir et la balance sont des équipements périphériques optionnels ; la balance permet de donner le poids, du ou des paquets de chaque expédition en vue d'établir son coût et la machine à affranchir d'imprimer des vignettes d'affranchissement à apposer sur les paquets expédiés par la poste (transporteur public).

Dans la figure 2, on a représenté l'ensemble de mémoires 2 de l'unité centrale de traitement et son organisation. Les mémoires de cet ensemble 2 sont dites fichiers. L'ensemble est organisé en trois fichiers principaux constituant respectivement un fichier des expéditions 20, un fichier des transporteurs 21 et un fichier des expéditeurs 22 et en deux fichiers supplémentaires optionnels qui forment un fichier des destinaires 23 et un fichier des pays 24. Les fichiers des transporteurs 21, des expéditeurs 22, des destinataires 23 et des pays 24 sont couplés au ficher des expéditions 20 qui est une mémoire de travail dans le système de traitement. Le fichier des destinataires et des pays 23 et 24 sont en outre couplés entre eux.

Au fichier des transporteurs 21 sont en outre associés d'une part un autre fichier principal annexe qui constitue un fichier des documents 25 et d'autre part un autre fichier optionnel annexe qui constitue un fichier des tarifs 26. Ces deux fichiers annexes 25 et 26 sont couplés au fichier des transporteurs 21 auxquels ils se rapportent.

Le fichier des transporteurs 21 contient les caractéristiques propres aux différents transporteurs utilisables par le système, c'est-à-dire la poste par exemple en tant que transporteur public et une pluralité de transporteurs privés existants. Les caractéristiques propres aux transporteurs définissent un code et le nom, les services possibles, c'est-à-dire les différents modes d'envois possibles et les différentes catégories d'envoi possibles, les jours ou dates prévus d'enlèvement des expéditions du lieu d'implantation du système, et l'identification des documents à éditer pour chaque service possible retenu, pour chacun des transporteurs.

Le fichier des documents 25 contient les caractéristiques propres des différents documents possibles à éditer pour chacun des différents transporteurs et selon leurs services. Les caractéristiques propres des différents documents définissent pour chacun d'eux, en regard de chaque transporteur concerné et de chacun de ses services, le format du document concerné, la taille et la forme des caractères à imprimer successivement et, en outre, les indicateurs de marquage, pour un guidage de l'opérateur en regard d'éventuelles opérations ultérieures à l'édition du document en cause. Ce fichier des documents est couplé au fichier des transporteurs pour délivrer les caractéristiques de chaque document concerné en regard du transporteur et de son service retenus, pour chaque expédition concernée.

Le fichier des tarifs 26, qui est optionnel, contient les tarifs unitaires d'expédition sous forme d'une table pour chacun des différents transporteurs.

Le fichier des expéditeurs 22 contient les caractéristiques propres aux différents expéditeurs utilisant le système de traitement des expéditions de paquets. Ces caractéristiques propres aux expéditeurs définissent le nom et l'adresse de chacun des expéditeurs accompagnés d'un code, mais également en outre l'identification de chaque transporteur qu'il souhaite utiliser avec les services retenus parmi ceux possibles auxquels a le droit cet expéditeur. Elles correspondent donc à des autorisations d'expéditions accordées par chaque expéditeur par rapport aux transporteurs. Elles définissent aussi une identification, sous forme d'un numéro individuel dite numéro d'envoi à affecter à chaque nouvelle expédition à traiter pour le compte de chaque expéditeur.

Le fichier des destinataires 23 contient les caractéristiques propres aux destinataires, clients réguliers des expéditeurs. Ces caractéristiques propres aux destinataires définissent un code d'identification, le nom et l'adresse de chacun des différents destinataires.

Le fichier des pays 24 contient un code d'identification des pays des destinataires pour permettre d'établir le coût de chaque expédition à partir du fichier des tarifs, et, en outre, un code de groupe auquel chaque pays appartient, pour permettre l'identification de documents spécifiques à des modes d'envois vers ces pays à partir du fichier des documents .

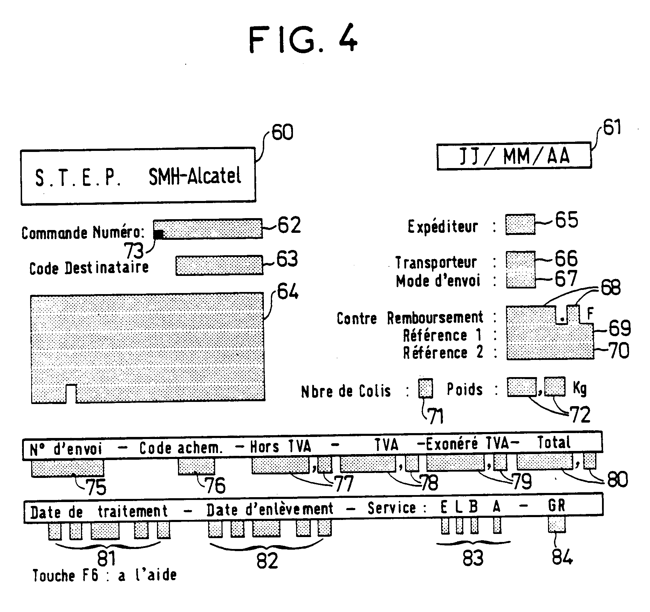

Le fichier des expéditions 20 est destiné à contenir les caractéristiques propres des expéditions, au fur et à mesure qu'elles sont élaborées sous le contrôle des moyens programmés de commande du système. Ces caractéristiques sont élaborées en partie à partir de données accompagnant chaque expédition, puis par le système de traitement lui même. Elles sont précisées ci-après, en particulier en regard de la figure 4 illustrant une grille de fiche vierge d'expédition sur l'écran lorsque le fichier des expéditions est vide en ce qui concerne l'expédition concernée. Les données qui accompagnent chaque expédition définissent quant à elles, en particulier, l'expéditeur, le numéro de commande pour l'expéditeur, le transporteur et le service retenus pour cette expédition par l'expéditeur.

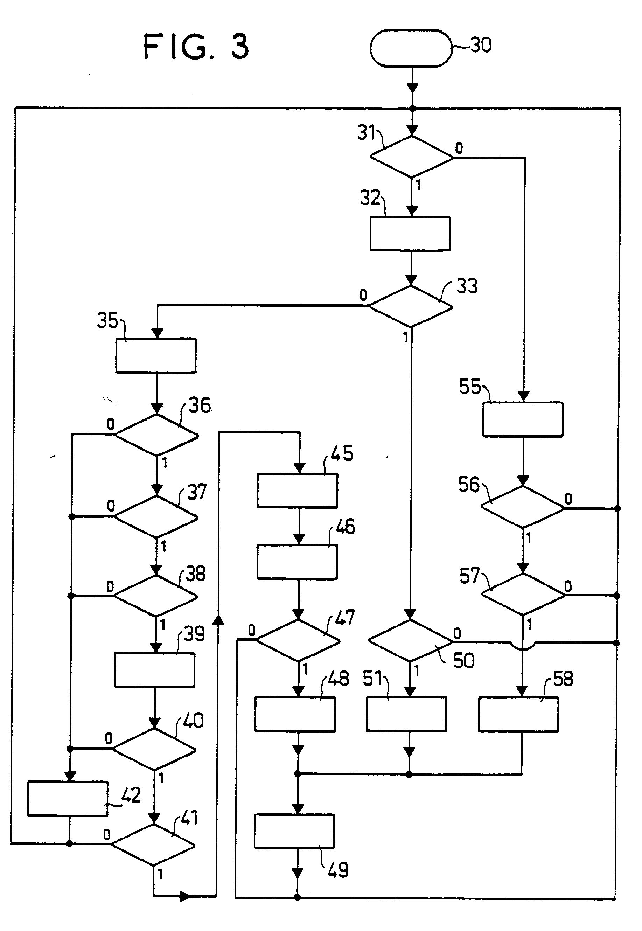

Le figure 3 représente l'organigramme de commande défini par les moyens programmés de commande 3 de la figure 1.

Dans cette figure 3, on a schématisé par des rectangles, désignés par des références numériques, des actions de commande qui sont définies ci-après, et par des losanges, également désignés par des références numériques, des opérations de décision qui sont également précisées ci-après. En sortie de ces losanges, le chiffre 1 signifie oui et le chiffre 0 signifie non.

Le déroulement de ce programme est déclenché par une instruction de début de programme schématisé en 30, lors de la mise en fonctionnement du système de traitement. Cette instruction de début de programme fait apparaître la grille d'une fiche vierge d'expédition sur l'écran du système. Ce programme est exécuté ensuite selon une phase initiale de choix d'un mode opératoire du système, au cours de laquelle l'opérateur accède à un mode d'édition de documents parmi plusieurs modes d'édition possibles, une phase de pré-traitement des expéditions au cours de laquelle une saisie des données et leur vérification sont réalisées pour chaque expédition concernée, et une phase de traitement des expéditions au cours de laquelle des caractéristiques complètes de chaque expédition sont élaborées et mémorisées pour donner lieu à l'édition des documents pour l'expédition concernée dite validée et alors traitée.

Les différents modes d'édition possibles sont préalablement définis dans le système. Ce sont deux modes d'édition des documents qui est dite individuelle, dans le mesure où chacun de ces deux modes concerne une seule expédition, avec pour l'un d'eux l'édition individuelle réalisée directement à la suite de la phase de traitement de l'expédition concernée et dite en simultané, et, pour l'autre, l'édition individuelle réalisée ultérieurement et sans relation dans le temps avec la phase de traitement de l'expédition concernée et dite alors en reprise, et un troisième mode d'édition de documents dite enchaînée dans la mesure où l'édition enchaînée concerne plusieurs expéditions.

Les actions de commande et opérations de décision successives de l'organisgramme de commande sont précisées ci-après, pour chacune des phases initiale, de pré-traitement des expéditions et de traitement des expéditions.

### I - Phase initiale :

Elle est déclenchée par l'instruction de début de programme 30 et consiste à :
- sélectionner, selon une opération 31, un mode opératoire entre une édition individuelle et une édition enchaînée, avec la sortie 1 de l'opération 31 traduisant le choix fait par l'opérateur pour l'édition individuelle et la sortie 0 l'édition enchaînée,
- désigner l'expédition, selon une action 32, lorsque l'édition individuelle a été choisie lors de l'opération 31, cette désignation de l'expédition étant réalisée par l'opérateur rentrant par le clavier le numéro de commande de l'expédition à désigner,
- vérifier si l'expédition désignée a déjà été traitée, selon une opération 33, traduisant dans l'affirmation par sa sortie 1 le choix de l'opérateur pour une édition individuelle en reprise et dans la négative par sa sortie 0 le choix de l'opérateur pour une édition individuelle en simultané.

### II - Phase de pré-traitement des expéditions :

Elle est déclenchée par la sortie 0 de l'opération 33 et consiste à :
- saisir les données de l'expédition, selon une action 35, au cours de laquelle l'opérateur rentre par le clavier les données de l'expédition concernée, en particulier, outre le numéro de commande déjà rentré, les identifications du destinataire, de l'expéditeur et du transporteur définies de préférence par leurs codes respectifs, le service retenu de ce transporteur le nombre de paquets de l'expédition et le poids total, si ce poids n'est pas rentré automatiquement par la balance, avec le code du destinataire ayant appelé du fichier des destinataires le nom et l'adresse complète de ce destinataire s'il existe dans ce fichier,
- vérifier l'existence dans les fichiers respectifs du pays du destinataire, du transporteur avec le service retenu et de l'expéditeur, selon une opération 36, au cours de laquelle est vérifiée une cohérence entre des données concernées qui ont été saisies et les contenus des fichiers, pour un traitement ultérieur possible de l'expédition,
- vérifier des autorisations spéciales définies dans le fichier des expéditeurs, selon une opération 37, au cours de laquelle est vérifiée l'autorisation donnée par cet expéditeur d'utiliser ce transporteur avec le service retenu,
- vérifier les données restantes, selon une opération 38, au cours de laquelle sont vérifiées les données restantes relatives au nombre de paquets et à leurs poids qui doivent être non nuls et exprimés uniquement par des chiffres, et
- si ces opérations 36, 37 et 38 sont successivement satisfaites et traduites par leur sortie 1, prélever la date d'enlèvement et le tarif du transporteur, calculer le prix, selon une action 39, réalisée à partir du fichier des transporteurs et de son fichier annexe des tarifs, puis
- vérifier la date d'enlèvement et le prix de l'expédition selon une opération 40, vérifiant que la date d'enlèvement n'est pas antérieure à la date actuelle et que le prix de l'expédition est compatible avec la règlementation de chaque transporteur définissant éventuellement pour chaque expédition le nombre maximal de paquets, tel que 1 paquet par expédition pour la poste, et le poids et/ou le prix maximal, et
- confirmer le traitement de cette expédition, selon une opération 41 conduisant, dans l'affirmative, au déclenchement de la phase de traitement de l'expédition dite alors validée et, dans la négative, à la reprise de l'opération 31,
- si par contre l'une des opérations 36, 37 et 38 ou l'opération 40 n'est pas satisfaite et est alors traduite par la sortie 0, afficher l'erreur détectée, selon une action 42, au cours de laquelle la donnée concernée affichée est pointée sur l'écran dans la grille de la fiche de l'expédition en cours de constitution mais non encore définitive.

L'action 42 d'affichage d'erreur présentée bouclée sur l'opération 31 de sélection d'édition individuelle ou enchaînée permet à l'opérateur, lorsqu'il ne modifie pas l'édition individuelle choisie et l'expédition désignée, de corriger la seule donnée erronée qui est pointée pour cette expédition, par l'action 35.

Les données saisies pour l'expédition au cours de la phase de pré-traitement sont de préférence mises en mémoire. Lors de l'opération 41, la confirmation demandée, lorsqu'elle est réalisée par l'opérateur, valide les données saisies, la date d'enlèvement et le prix qui constituent dès lors ensemble des caractéristiques définitives bien que partielles de cette expédition.

Par contre, les données saisies et éventuellement la date d'enlèvement et le prix de l'expédition, résultant de la phase de prétraitement avant l'opération 41 ou avec réponse négative de l'opérateur à cette opération 41, ne constituent que de simples paramètres pré-enregistrés de l'expédition dite alors préparée mais non validée, qui ne sera pas traitée dans l'immédiat.

Ces paramètres pré-enregistrés réduiront la phase de pré-traitement de cette expédition lorsqu'elle sera reprise par l'opérateur.

### III - Phase de traitement des expéditions :

Elle est déclenchée par la sortie 1 de l'opération 41 et consiste à :
- affecter un numéro d'envoi et une date de traitement à l'expédition dite alors traitée, selon une action 45, ce numéro d'envoi constituant une référence de l'expédition pour le transporteur, qui est définie en regard de l'expéditeur concerné et prélevée du fichier des expéditeurs, et la date de traitement étant la date actuelle,
- mémoriser les caractéristiques de l'expédition traitée et le numéro d'envoi suivant pour la prochaine expédition, selon une action 46, consistant à mémoriser de manière définitive dans le fichier des expéditions le numéro d'envoi et la date de traitement avec les caractéristiques partielles de cette expédition, qui constituent ensemble les caractéristiques de l'expédition enregistrées dans sa fiche, et à mémoriser dans le fichier des expéditeurs le numéro d'envoi suivant à utiliser,
- confirmer l'édition individuelle des documents en simultané, selon une opération 47 et,
- dans l'affirmative à l'issue de l'opération 47, éditer les documents, selon une action 48, au cours de laquelle les documents à éditer sont désignés en regard des caractéristiques de cette expédition à partir du fichier des documents et sont édités,
- mémoriser dans le fichier des expéditions des caractéristiques propres aux éditions, selon une action 49, au cours de laquelle est réalisée une mise à jour de la fiche de l'expédition concernée en regard des éditions de documents réalisées,
- dans la négative à l'issue de l'opération 47, reprendre l'opération 31.

L'édition individuelle en simultané est une action qui appartient directement à la phase de traitement des expéditions puisqu'elle suit immédiatement, lorsqu'elle est voulue, la mémorisation définitive des caractéristiques de l'expédition traitée. L'édition individuelle en reprise et l'édition enchaînée seront par contre deux actions qui définissent dans le programme deux étapes d'édition différées par rapport à la phase de traitement de la ou des expéditions concernées qui ont été nécessairement traitées, pour la mémorisation de leurs caractéristiques, lors de l'action 46. Ces deux étapes d'édition différées sont sélectivement accessibles à partir de la phase initiale.

L'étape d'édition individuelle en reprise, lorsque celle-ci est choisie à l'issue de l'opération 33 et traduite par la sortie 1 de cette opération, consiste à :
- confirmer l'édition en reprise, selon une opération 50 et,
- dans l'affirmative, éditer les documents pour l'expédition désignée, selon une action 51 présentée bouclée sur l'action 49 précédente pour la mise à jour de la fiche de cette expédition en regard des éditions qui viennent d'être réalisées,
- dans la négative réprendre à l'opération 31, selon le rebouclage de la sortie 0 de l'opération 51 sur l'opération 31.

L'étape d'édition enchaînée, lorsque celle-ci est choisie à l'issue de l'opération 31 et traduite par sa sortie 0, consiste à :
- désigner les expéditions concernées, selon une action 55 par laquelle l'opérateur désigne les expéditions par l'une de leurs caractéristiques sélectives en regard du transporteur ou en regard de l'expéditeur,
- vérifier que les expéditions désignées sont traitées, selon une opération 56, consistant en une lecture du fichier des expéditions,
- confirmer l'édition enchaînée selon une opération 57 et,
- dans l'affirmative pour ces deux opérations 56 et 57, éditer les documents concernant les expéditions désignées, selon une action 58 présentée bouclée sur l'action 49 précédente pour la mise à jour des fiches de ces expéditions,
- dans la négative pour l'une ou l'autre des opérations 56 et 57 reprendre à l'action 31, la sortie 0 de l'opération 56 et de l'opération 57 étant rebouclée sur l'action 31.

L'édition enchaînée qui permet d'éditer les séries de documents accompagnant différentes expéditions permet aussi d'éditer des bordereaux récapitulatifs de transporteurs ou d'expéditeurs et des listes récapitulatives relatives aux expéditions, à partir de fonctions spécifiques de commande du système définies dans la mémoire de fonctions 4 de la figure 1. Les principales fonctions de commande sont simplement définies ci-après. Ce sont :
- éditer un bordereau transporteur,
- éditer un bordereau expéditeur,
- éditer une liste des expéditions traitées mais non enlevées,
- éditer une liste des expéditions préparées mais non validées,
- annuler une expédition traitée,
- effacer les expéditions enlevées,
- accéder au fichier des destinataires,
- accéder au fichier des transporteurs,
- accéder au fichier des expéditeurs.

Chacune de ces fonctions est par exemple accessible par une touche individuelle de fonction prévue sur le clavier.

Les fonctions d'édition de bordereaux ou de listes relatives aux expéditions donnent accès au fichier des expéditions et permettent d'éditer le document spécifié à partir des caractéristiques propres à ce document contenues dans le fichier des documents et des caractéristiques des expéditions concernées. Ainsi l'opérateur peut obtenir un bordereau transporteur, par transporteur et par mode d'envoi et éventuellement pour un expéditeur donné. Chaque édition spécifique peut le cas échéant donner lieu à une mise à jour du fichier des expéditions.

La fonction d'annulation d'une expédition traitée et celle d'effacement des expéditions enlevées, donnent également directement accès au fichier des expéditions. Celle d'annulation permet lorsque l'expédition a été précédemment traitée de la conserver dans le fichier des expéditions avec un code d'annulation enregistré. Cette expédition annulée dans le fichier des expéditions apparaîtra dans tout document édité qui la concerne, avec son code d'annulation, mais les montants relatifs au prix de cette expédition ne seront alors pas comptabilisés dans les éventuels totaux réalisés.

La fonction d'effacement des expéditions enlevées permet à l'opérateur de retirer du fichier des expéditions toutes les fiches dont le bordereau transporteur a été effectué, ces expéditions étant considérées alors enlevées par le transporteur.

Les fonctions d'accès aux fichiers des destinataires, des transporteurs et des expéditeurs permettent à l'opérateur de compléter ou de modifier ces fichiers.

Ainsi par exemple, l'opérateur peut ajouter le nom d'un destinataire jusque-là inconnu, lors du pré-traitement d'une expédition le concernant ; il peut aussi corriger la date d'enlèvement dans le fichier des transporteurs lorsque celle-ci n'a pas été mise à jour et est détectée antérieure à la date actuelle.

Dans la figure 4, on a illustré pour une meilleure compréhension du fonctionnement du système une grille d'une fiche vierge d'expédition, telle qu'elle apparait sur l'écran dès l'instruction de début de programme. Cette grille est remplie au fur et à mesure de la phase de traitement, mais la fiche de l'expédition n'est dite définitivement constituée et mémorisée que lors du déclenchement de la phase de traitement.

La grille de la fiche vierge porte dans une zone 60 le nom du système et de son titulaire, ici S.T.E.P. SMH-Alcatel et dans une zone 61, la date actuelle notée JJ/MM/AA suivie éventuellement de l'indication de l'heure précise. Elle comporte en outre, associées à des textes, différentes zones qui sont remplies successivement et précisées en regard des textes. Ce sont :
- Commande numéro, dont la zone associée 62 reçoit la référence de l'expédition pour l'expéditeur.
- Code destinataire, dont une première zone associée 63 reçoit le code sous lequel est connu le destinataire par l'expéditeur, et une deuxième zone associée 64, plus importante, reçoit à partir du code en zone 63 et du fichier des destinataires le nom et l'adresse complète du destinataire.
- Expéditeur, dont la zone associée 65 reçoit un code de l'expéditeur pour le système,
- Transporteur, dont la zone associée 66 reçoit un code d'identification du transporteur pour le système,
   - Mode d'envoi, dont la zone associée 67 reçoit le code du mode d'envoi du transporteur, pour le service retenu par l'expéditeur,
   - Contre-remboursement, dont la zone associée 68 reçoit le montant du contre-remboursement, pour la service retenu éventuellement, par l'expéditeur, exprimé avec deux décimales, ici en francs F,
   - Référence 1, Référence 2, dont les zones associées 69 et 70 reçoivent, le cas échéant, pour certains transporteurs des références pour des modes d'envoi avec contre-remboursement,
   - Nombre de colis : dont la zone associée 71 reçoit le nombre de paquets que comporte l'expédition,
   - Poids, dont la zone associée 72 reçoit la somme des poids des paquets de l'expédition, exprimée avec deux décimales en kilogrammes Kg.

Ces zones 62 à 72, exception faite de la zone 64, sont remplies lors de l'opération 35 de saisie des données du programme de commande, ces données étant rentrées par l'opérateur par le clavier.

Elles sont au fur et mesure vérifiées au cours de la phase de pré-traitement, sont affichées en cas d'erreur détectée et modifiables si nécessaire.

Un pointeur 73, illustré en regard de la première zone à remplir 62, désigne les zones successives à remplir, ou se maintient sur la zone remplie mais erronée pour l'affichage de l'erreur et son éventuelle correction par l'opérateur.

Ces zones 62 à 72 sont les zones de la fiche accessibles pour l'opérateur. Ces zones étant remplies pour au moins une partie d'entre-elles, même si l'une d'elles est erronée, la fiche à ce stade n'est qu'une fiche de préparation de l'expédition.

En plus de ces zones accessibles pour l'opérateur, la grille de la fiche d'expédition comporte d'autres textes auxquels sont associées d'autres zones dites de calcul dans lesquelles l'opérateur ne peut pas intervenir. Ces derniers textes et les zones de calcul qui leur sont associées sont présentés regroupés, ici ils sont en ligne et au bas de la grille, avec chaque zone de calcul au dessous de son texte
Ce sont :
- N° d'envoi, dont la zone associée 75 reçoit la référence de l'expédition pour le transporteur, en regard de l'expéditeur,
- code achem., dont la zone associée 76 reçoit un code dit d'acheminement défini éventuellement par le transporteur et contenu alors dans le fichier du transporteur d'où il est prélevé,
- Hors TVA, dont la zone associée 77 reçoit le montant hors taxe calculé,
- TVA, dont la zone associée 78 reçoit le montant de la taxe,
- Exonéré TVA, dont la zone associée 79 reçoit le montant exonéré de taxe,
- Total, dont la zone associée 80 reçoit la somme des montants des zones 77 à 79 ; les zones 77 à 80 sont des zones doubles avec virgule, pour recevoir chaque montant exprimé avec deux décimales,
- Date de traitement, dont la zone associée 81 reçoit la date actuelle de ce traitement, avec indication de l'heure et des minutes,
- Date d'enlèvement, dont la zone associée 82 reçoit la date d'enlèvement du transporteur prélevée du fichier des transporteurs,
- Service : E.L.B.A. dont les zones individuelles associées notées globalement sous la référence 83 sont affectées au nombre d'éditions d'étiquettes, pour la lettre E, de lettres de transport ou vignettes d'affranchissement, pour la lettre L, de bordereaux de transporteur pour la lettre B et à l'indication d'annulation de la fiche d'expédition traitée, pour la lettre A,
- GR : dont la zone associée 84 reçoit l'identification du groupe auquel appartient le pays du destinataire.

L'affectation d'un numéro d'envoi à l'expédition rend la fiche définitive dans le fichier des expéditions. A ce stade elle peut être annulée mais ne sera pas pour autant retirée du fichier des expéditions, alors qu'une fiche de préparation de l'expédition lorsqu'elle est annulée est retirée.

Le fichier des expéditions contient donc les fiches de préparation pour certaines expéditions non validées et les fiches d'expédition pour les expéditions traitées. Il permet en plus des éditions de documents de retrouver les fiches par différents moyens, en particulier le numéro de commande de l'expédition ou par balayage du ficher des expéditions avec une sélection possible par l'une des données de l'expédition.

Le système de traitement des expéditions de paquets constitue un poste de travail d'opérateur. Il assite l'opérateur dans la saisie des données relatives aux expéditions et dans la réalisation des calculs de prix. Il réalise pour les expéditions validées et donc traitées, l'édition de documents fiables et sans erreur, facilitant le travail du transporteur en ce qui concerne le contrôle des paquets déposés, leur identification dans les centres de tri et leur distribution aux destinataires concernés.

## Revendications

1. Système de traitement des expéditions de paquets permettant, à partir de données définissant pour chaque expédition un destinataire et un transporteur avec un service de transporteur à utiliser, l'acheminement des expéditions reçues de différents expéditeurs vers leurs destinataires respectifs par différents transporteurs, comportant :
- des premières mémoires qui constituent, d'une part un fichier des transporteurs (21) contenant des caractéristiques propres aux transporteurs utilisables dans le système et relatives à l'identification individuelle des transporteurs eux-mêmes et à l'identification, pour chacun d'eux, de services possibles et de types de documents devant pour chaque service accompagner chaque expédition, et, d'autre part, un fichier des expéditeurs (22) contenant des caractéristiques propres aux expéditeurs utilisant le système et relatives à l'identification individuelle des expéditeurs eux-mêmes et pour chacun d'eux à l'identification de chaque transporteur qu'il peut utiliser avec chaque service de ce transporteur auquel il a le droit,
- une deuxième mémoire qui constitue un fichier des expéditions (20),
- un moyen d'entrée (6) des données relatives à chaque expédition,
- des moyens d'édition de documents (10-13),
- un ensemble programmé de commande (3) couplé auxdits fichiers, au moyen d'entrée et aux moyens d'édition et comportant des moyens de pré-traitement des expéditions (35-42), assurant une saisie des données, des moyens de traitement des expéditions (45-46), affectant à chaque expédition une référence individuelle définissant avec les données saisies et vérifiées des caractéristiques de l'expédition concernée dite alors traitée et mémorisant les caractéristiques de chaque expédition traitée en une fiche d'expédition dans le fichier des expéditions, et des moyens de commande d'édition de documents (48, 51, 58) permettant la génération de documents identifiés dans le fichier des transporteurs à partir de la fiche d'expédition du fichier des expéditions, pour l'expédition concernée,
caractérisé en ce que les moyens de prétraitement des expéditions comportent des moyens logiciels (35 à 42) pour comparer les données saisies à des données contenues dans les premières mémoires (21) et à des données contenues dans la deuxième mémoire (20); et pour afficher toute erreur détectée par cette comparaison.

2. Système de traitement selon la revendication 1, caractérisé en ce que ledit ensemble programmé (3) comporte des moyens de mise à jour (49) de chaque fiche d'expédition, couplés auxdits moyens de commande d'édition (48, 51, 58) et assurant l'enregistrement du nombre de documents édités de chaque type dans la fiche d'expédition, pour celle concernée.

3. Système de traitement selon la revendication 2, caractérisé en ce que ledit ensemble programmé (3) comporte des premiers moyens de sélection d'édition de documents (31, 32, 55, 56) entre un mode d'édition individuelle relatif à une expédition désignée et un mode d'édition en enchaîné relatif à plusieurs expéditions désignées et détectées traitées.

4. Système de traitement selon la revendication 3, caractérisé en ce que ledit ensemble programmé (3) comporte, en outre, des seconds moyens de sélection d'édition individuelle de documents (33) entre un mode d'édition en simultané relatif à une expédition désignée et un mode d'édition en reprise relatif à une expédition désignée et détectée traitée.

5. Système de traitement selon l'une des revendications 2 à 4, caractérisé en ce qu'il comporte en outre une horloge calendrier (5) couplée audit ensemble programmé, en ce que lesdits moyens de prétraitement des expéditions comportent des moyens de vérification (39) d'une date d'enlèvement d'expédition, définie avec les caractéristiques propres aux transporteurs dans le fichier des transporteurs (21), pour chaque transporteur, par rapport à la date actuelle, et en ce que lesdits moyens de traitement affectent à chaque expédition, en plus de ladite référence d'expédition, une date de traitement qui est la date actuelle et associent la date d'enlèvement aux caractéristiques de chaque expédition dans le fichier des expéditions.

6. Système de traitement selon l'une des revendications 2 à 5, caractérisé en ce que lesdits premières mémoires constituent en outre un fichier des tarifs des transporteurs (26) couplé audit fichier des transporteurs (21), et en ce que lesdits moyens de pré-traitement comportent, des moyens de vérification (38) d'une indication de poids et d'une indication de nombre de paquets, pour chaque expédition, qui sont associées à ses données saisies.

7. Système de traitement selon la revendication 6, caractérisé en ce qu'il comporte une balance (14) couplée audit ensemble programmé (3).

8. Système de traitement selon la revendication 7, caractérisé en ce que les moyens d'édition comportent une machine à affranchir (13) et des imprimantes (10-12) pour les documents autres que des vignettes d'affranchissement.

9. Système de traitement selon l'une des revendications 6 et 7, caractérisé en ce que lesdites premières mémoires constituent en outre un fichier des pays destinataires (23) contenant des caractéristiques propres auxdits pays et relatives à leur identification d'une part en regard des tarifs, et d'autre part en regard de documents spécifiques à des services pour ces pays.

10. Système de traitement selon l'une des revendications 3 à 9, caractérisé en ce que lesdites premières mémoires constituent en outre un fichier des documents (25) contenant des caractéristiques propres aux différents documents accompagnant chaque expédition, pour les différents transporteurs et leurs services, et à des bordereaux et listes récapitulatives pour les transporteurs et les expéditeurs.

11. Système de traitement selon l'une des revendications 2 à 10, caractérisé en ce qu'il comporte des moyens d'accès (4) aux différents fichiers, couplés audit ensemble programmé (3).

## Patentansprüche

1. System zur Bearbeitung der Abfertigung von Paketen, das ausgehend von Daten, die für jede Sendung einen Empfänger und einen Transportdienst zusammen mit einer bestimmten zu verwendenden Dienstleistung sowie den Leitweg der von verschiedenen Absendern erhaltenen Sendungen über verschiedene Transportdienste zu den jeweiligen Empfängern definiert,
- mit ersten Speichern, die einerseits eine Kartei (21) der Transportdienste mit Angaben über die in dem System einsetzbaren Transportdienste und bezüglich der individuellen Identifizierung der Transportdienste selbst sowie der Identifizierung der möglichen Dienstleistungen jedes Transportdiensts und der Dokumente, die für jede Dienstleistung jede Sendung begleiten müssen, und andererseits eine Absenderkartei (22) bilden, mit Kenndaten bezüglich der das System benutzenden Absender und bezüglich der individuellen Identifizierung der Absender und der Identifizierung des Transportdiensts, den er verwenden kann mit jeder Dienstleistung dieses Transportdiensts, die er in Anspruch nehmen kann,
- mit einem zweiten Speicher, der eine Sendungskartei (20) bildet,
- mit einem Eingangsmittel (6) für die jeder Sendung zugeordneten Daten,
- mit Dokumentenausgabemitteln (10 bis 13),
- mit einer programmierten Steuereinheit (3), die mit den Karteien, mit den Eingangsmitteln und mit den Ausgabemitteln gekoppelt ist und Mittel zur Vorbearbeitung der Sendungen (35 bis 42) aufweist, die eine Datenerfassung gewährleisten, wobei Mittel zur Bearbeitung der Sendungen (45 bis 46) jeder Sendung eine individuelle Referenz zuteilen, die mit den erfaßten und überprüften Daten Kennwerte der betreffenden Sendung definieren, die dann als bearbeitet bezeichnet wird, und die Kennwerte jeder bearbeiteten Sendung in eine Sendungskarte einer Sendungskartei einspeichern, wobei weiter Mittel zur Steuerung der Ausgabe von Dokumenten (48, 51, 58) vorgesehen sind, die die Erzeugung von in der Kartei der Transportdienste ausgehend von der Sendungskarte der Sendungskartei identifizierten Dokumenten für die betreffende Sendung ermöglichen, dadurch gekennzeichnet, daß die Sendungs-Vorbearbeitungsmittel Softwaremittel (35 bis 42) zum Vergleich der erfaßten Daten mit in den ersten Speichern (21) enthaltenen Daten und mit im zweiten Speicher (20) enthaltenen Daten und zur Anzeige jedes bei diesem Vergleich erfaßten Fehlers aufweist.

2. Bearbeitungssystem nach Anspruch 1, dadurch gekennzeichnet, daß die programmierte Einheit (3) Mittel (49) zur Aktualisierung jeder Sendungskarte aufweist, die mit den Mitteln zur Steuerung der Ausgabe (48, 51, 58) gekoppelt sind und die Registrierung der Anzahl von ausgegebenen Dokumenten jedes Typs in der Sendungskarte für die betroffenen Sendung sichert.

3. Bearbeitungssystem nach Anspruch 2, dadurch gekennzeichnet, daß die programmierte Einheit (3) erste Mittel zur Wahl einer Dokumentenausgabe (31, 32, 55, 56) zwischen einem Modus der individuellen Ausgabe bezüglich einer bezeichneten Sendung und einem Kettenausgabemodus bezüglich mehrerer bezeichneter und als bearbeitet erkannter Sendungen aufweist.

4. Bearbeitungssystem nach Anspruch 3, dadurch gekennzeichnet, daß die programmierte Einheit (3) weiter zweite Mittel zur Wahl der individuellen Dokumentenausgabe (33) zwischen einem sofortigen Ausgabemodus einer bezeichneten Sendung und einem zeitverschobenen Ausgabemodus bezüglich einer bezeichneten und als bearbeitet erkannten Sendung aufweist.

5. Bearbeitungssystem nach einem der Ansprüche 2 bis 4, dadurch gekennzeichnet, daß es außerdem eine Kalenderuhr (5) aufweist, die mit der programmierten Einheit gekoppelt ist, daß die Mittel (35 bis 42) zur Überprüfung Mittel (39) enthalten, die ein Entnahmedatum der Sendung überprüfen, welches mit den Kennwerten der Transportdienste in der Transportdienst--Kartei (21) für jeden Transportdienst bezüglich des aktuellen Datums definiert ist, und daß die Bearbeitungsmittel jeder Sendung außer der Sendungsreferenz ein Bearbeitungsdatum zuordnen, das das aktuelle Datum ist, und das Entnahmedatum den Kennwerten jeder Sendung in der Sendungskartei zuordnen.

6. Bearbeitungssystem nach einem der Ansprüche 2 bis 5, dadurch gekennzeichnet, daß die ersten Speicher außerdem eine Kartei der Transportdiensttarife (26) bilden, die mit der Transportdienstkartei (21) gekoppelt ist, und daß die Überprüfungsmittel Mittel (38) aufweisen, um eine Angabe über das Gewicht und eine Angabe über die Anzahl der Pakete für jede Sendung zu überprüfen, die diesen erfaßten Daten zugeordnet sind.

7. Bearbeitungssystem nach Anspruch 6, dadurch gekennzeichnet, daß es eine Waage (14) aufweist, die mit der programmierten Einheit (3) gekoppelt ist.

8. Bearbeitungssystem nach Anspruch 7, dadurch gekennzeichnet, daß die Ausgabemittel eine Frankiermaschine (13) und Drucker (10 bis 12) zum Drucken der anderen Dokumente neben den Frankierstempeln besitzen.

9. Bearbeitungssystem nach einem der Ansprüche 6 und 7, dadurch gekennzeichnet, daß die ersten Speicher weiter eine Kartei der Empfängerländer (23) bilden, die Kennwerte der Länder sowie Merkmale bezüglich ihrer Identifizierung einerseits hinsichtlich der Tarife und andererseits hinsichtlich der spezifischen Dokumente für Dienstleistungen in diesen Ländern enthalten.

10. Bearbeitungssystem nach einem der Ansprüche 3 bis 9, dadurch gekennzeichnet, daß die ersten Speicher außerdem eine Dokumentenkartei (25) bilden, die Kennwerte der verschiedenen jede Sendung begleitenden Dokumente für die verschiedenen Transportdienste und ihre Dienstleistungen sowie Kennwerte hinsichtlich der Sammellisten für die Transportdienste und die Absender enthalten.

11. Bearbeitungssystem nach einem der Ansprüche 2 bis 10, dadurch gekennzeichnet, daß es Zugangsmittel (4) zu den verschiedenen Karteien besitzt, die mit der programmierten Einheit (3) gekoppelt sind.

## Claims

1. A computerized parcel shipping system for routing shipments received from different senders to respective recipients via different carriers on the basis of data defining a recipient for each shipment, together with a carrier and a specific one of that carrier's services which is to be used, the system comprising:
first memories constituting, firstly a carrier file (21) containing characteristics specific to carriers usable by the system and relating to individual identification of the carriers themselves and to identification of the various services offered by each of them, together with the types of document required for accompanying each shipment for each service, and secondly a sender file (22) containing characteristics specific to the senders using the system and relating to individual identification of the senders themselves, and to identification of the carriers that each of the senders may use and the services of said carriers to which they have access;
a second memory constituting a shipment file (20); input means (6) for inputting data relating to each shipment;
print means (10-13) for outputting documents; and
a programmed control unit (3) coupled to said files, to said input means, and to said print means, and including shipment preprocessing means (35-42) for inputting data, shipment processing means (45-46) attributing an individual reference to each shipment which, together with the data as input and verified defines the characteristics of the corresponding shipment, referred to as a "processed" shipment, and storing the characteristics of each processed shipment in a shipment record in the shipment file, and document printing control means (48, 51, 58) for generating the documents identified in the carrier file on the basis of the shipment record in the shipment file corresponding to each shipment, characterized in that the shipment preprocessing means include software means (35-42) for comparing inputted data with data held in the first memories (21) and with data held in the second memory (20), and for displaying any error detected by this comparison.

2. A system according to claim 1, characterized in that said programmed unit (3) includes means (49) for updating each shipment record form, said means being coupled to the printing control means (48, 51, 58) and serving to record the number of documents of each type that have been printed in the shipment record for each shipment.

3. A system according to claim 2, characterized in that said programmed unit (3) includes first document printing select means (31, 32, 35, 56) for selecting between an one-off printing mode relating to a designated shipment, and a batch printing mode relating to a plurality of designated shipments which are all detected as being processed.

4. A system according to claim 3, characterized in that said programmed unit (3) further includes second one-off document printing select means (33) for selecting between an immediate printing mode relating to a designated shipment and a deferred printing mode relating to a designated shipment which is detected as having been processed.

5. A system according to any one of claims 2 to 4, characterized in that it further includes a calendar clock 5 coupled to said programmed unit, in that said verification means (35-42) include means (39) for verifying a shipment pick-up date, said date being defined amongst the characteristics specific to the carriers in the carrier file (21) for each carrier, and comparing said date with the current date, and in that said processing means attribute a processing date to each shipment in addition to said shipping reference, said processing date being the current date, and associate the pick-up date with the characteristics of each shipment in the shipment file.

6. A system according to any one of claims 2 to 5, characterized in that said first memories also include a carrier tariff file (26) coupled to said carrier file (21), and in that said verification means include means (38) for verifying an indicated weight and an indicated number of parcels, with respect to each shipment, with said weight and number being associated with the input data.

7. A system according to claim 6, characterized in that it includes scales (14) coupled to said programmed unit (3).

8. A system according to claim 7, characterized in that the print means include a franking machine (13) and printers (10-12) for printing documents other than payment stickers.

9. A system according to claim 6 or 7, characterized in that said first memories also include a designation country file (23) containing characteristics specific to said countries, and relating to their identification both with respect to tariff and with respect to the documents specific to services for said countries.

10. A system according to any one of claims 3 to 9, characterized in that said first memories also include a document file (25) containing characteristics specific to different documents accompanying each shipment, for the various different carriers and their various services, and also relating to summary lists for the carriers and the senders.

11. A system according to any one of claims 2 to 10, characterized in that it includes means (4) coupled to said program unit (3) and giving access to the various files.
